# EUROPÄISCHE PATENTANMELDUNG

(11) **EP 1 241 600 A1**
(43) Veröffentlichungstag der Anmeldung: **18.09.2002**
(21) Anmeldenummer: 01106128.0
(22) Anmeldetag: 13.03.2001
(51) Int. Cl.: G06F 17/60, H04M 3/493

(54) **Verfahren und Kommunikationssystem zur Generierung von Antwortmeldungen**

(71) Anmelder: Siemens Schweiz AG, 8047 Zürich (CH)
(72) Erfinder: Jugovec, Wolfgang, 5212 Hausen bei Brugg (CH)
(74) Vertreter: Berg, Peter

(57) **Zusammenfassung**

Zur Generierung von Antwortmeldung auf eingehende Meldungen wird ein Verfahren und ein Kommunikationssystem vorgeschlagen. Es enthält eine Dialogmaschine (5), eine Vermittlungseinheit (4), ein Spracheingabemodul (53) und ein Sprachausgabemodul (52). Die eingehenden Meldungen sind ausgebildet als Anrufe in Echtzeit, als gespeicherte Anrufe oder als Textmeldungen. Von diesen Meldungen wird eine typisierte Adresse angelegt und einem Spracheingabemodul (53) zugeführt. Über Verfahrensschritte in einer akustischen vorverarbeitungseinheit (6), einer Spracherkennungseinheit (3) und einem Textausgabe-Dispatcher (7) wird eine Anfrage zu einer Datenbank (9) erzeugt. Antwortmeldungen von dieser Datenbank (9) werden entweder direkt an den Ursprung oder über eine Text-Vorverarbeitungseinheit (1), eine Sprachsyntheseeinheit (2) und einen Sprachausgabe-Dispatcher (8) an den Ursprung der eingegangenen Meldung übermittelt. Nicht bearbeitbare Anrufe werden zu Agenten durchgeschaltet. Der modulare Aufbau des Kommunikationssystem erlaubt, verschiedene Produkte zur Sprachsynthese oder Spracherkennung ohne eine Neuintegration einzusetzen.

## Beschreibung

Die vorliegende Erfindung betrifft ein Verfahren zur Generierung von Antwortmeldungen auf eingehende Meldungen mit einem Kommunikationssystem und ein Kommunikationssystem zur Generierung von Antwortmeldung auf eingehende Meldungen gemäss dem Oberbegriff des Patentanspruchs 1 bzw. 10.

Unter den Begriff Sprachverarbeitung fällt einerseits eine Umsetzung von Sprache in Text - meist Spracherkennung genannt - und andererseits eine Umwandlung von Text in Sprache - meist Sprachsynthese genannt - .

Für die Umwandlung von Text in Sprache und umgekehrt gibt es sogenannte "Software Development Kits", mit denen Produkte fallweise und individuell in entsprechende Kundenlösungen integriert werden. Nachteilig ist, das der Wechsel zu einem anderen Produkt eine vollständig neue Integration erfordert.

Anfragen von Kunden sollten möglichst unabhängig davon sein, von welcher Art das Anfrage-Medium ist. Folgende Arten des Anfrage-/Antwort-Mediums treten häufig auf:
- Direktes Telefongespräch mit einem Agenten;
- ein Sprachaufzeichnungsgerät - auch Telefonbeantworter genannt - das direkt angewählt oder bei Nichtverfügbarkeit eines Agenten zugeschaltet wird;
- E-Mail mit einer Anfrage in Textform;
- E-Mail, das eine Audio-Datei mit einer gesprochenen Nachricht enthält.
Weiter soll es unerheblich sein, ob eine E-Mail in Textform ursprünglich als solche vorhanden war oder beispielsweise aus dem GSM-Dienst Short Message Service erzeugt wurde.

In WO 99/07118 ist ein Kommunikationssystem angegeben, das erlaubt, ein Zeitverwaltungssystem mit in E-Mail enthaltenen gesprochenen Nachrichten bezüglich Verabredungsdaten wie Datum/Uhrzeit, Ort und allenfalls Betreff abzugleichen oder abzufragen und automatisch ein E-Mail zu generieren, das die ursprünglich vereinbarten oder die neuen Verabredungsdaten enthält.

Bei Kommunikationssystemen der vorgenannten Art wie auch z.B. bei der Sprachsynthese für Auskunftssysteme, besteht das Problem, bei einem Wechsel zu einem anderen Produkt der Sprachsynthese (TTS Text to Speech) und/oder der Spracherkennung (ASR Automated Speech Recognition) eine vollständig neue Integration in das betreffende Kommunikations- und Datenbanksystem vornehmen zu müssen.

Der vorliegenden Erfindung liegt daher die Aufgabe zugrunde, ein Verfahren und ein Kommunikationssystem der eingangs genannten Art anzugeben, das eine automatisierte Generierung von Antwortmeldungen ermöglicht und mit geringem Integrationsaufwand an verschiedene Produkte zur Sprachsynthese und/oder zur Spracherkennung anpassbar ist.

Diese Aufgabe wird durch die im Patentanspruch 1 bzw. 10 angegebenen Massnahmen gelöst. Vorteilhafte Ausgestaltungen der Erfindung sind in weiteren Ansprüchen angegeben.

Durch die im Patentanspruch 1 angegebenen Verfahrensschritte werden eingehende Anrufe unabhängig von der Art automatisch analysiert und in Anfragen zu einer Datenbank konvertierbare Anrufe führen zu von einer Datenbank erzeugten Antwortmeldung, die direkt als Text-Antwortmeldung oder durch eine Konversion in einem Sprachausgabemodul als gesprochene Antwortmeldung an den Ursprung geleitet werden, wobei die nicht konvertierbaren Anrufe zur persönlichen Weiterbehandlung einem Agenten zugewiesen werden.

Das im Patentanspruch 10 angegebene Kommunikationssystem weist eine Gliederung in Funktionseinheiten auf, so dass für die verschiedenen Einheiten Produkte einsetzbar sind, die leicht ausgetauscht werden können und eine Aufteilung auf verschiedene Server eines Rechnersystems ermöglichen.

So können sich die folgenden Vorteile zusätzlich ergeben:
i) Dadurch dass
   die im Verfahrensschritt D1 vom Sprachausgabemodul konvertierten Antwortmeldungen mit festen Sprachtexten ergänzt werden;
   ergibt sich für die Anfrage einer Person den Eindruck einer persönlichen Antwort und hilft, Vorurteile und Aversionen gegenüber automatisierten Auskunftssystem abzubauen (Patentanspruch 2).
ii) Dadurch dass
   die zusammen mit der typisierten Adresse gespeicherte Textmeldung vor Ausführung des Verfahrensschrittes D1 mit einem Hinweistext ergänzt wird, der vom Ergebnis der im Verfahrensschritt B11 vorgenommenen Konversion abhängig ist;
   werden alle eingehenden Textmeldungen in einer auch für den unbeholfenen Anwender akzeptablen Form beantwortet (Patentanspruch 6).
iii) Dadurch dass
   im Verfahrensschritt D1 vorgängig der Konversion im Sprachausgabemodul die Antwortmeldung in einer im Sprachausgabemodul enthaltenen Text-Vorverarbeitungseinheit bezüglich der in der Antwortmeldung enthaltenen Ziffern gruppiert wird oder bezüglich in der Antwortmeldung enthaltenen fremdsprachigen Wörtern phonetisch ergänzt wird;
   ist die generierte Antwortmeldung an die verschiedenen Gewohnheiten in den Sprachregionen oder Ländern leicht anpassbar und erhöht die Akzeptanz in der Nutzung solcher Kommunikationssysteme (Patentanspruch 7).
iv) Dadurch dass
   die Vermittlungseinheit (4) und/oder das Spracheingabemodul (53, 3) und/oder das Sprachausgabemodul (52, 2) auf mehrere über ein Netzwerk verbundene Server (10, 20, ..) verteilt implementiert ist;
   kann das erfindungsgemässe Kommunikationssystem auf die jeweilige Anwendung angepasst auf die jeweilige Serverumgebung skalierbar implementiert werden.
   (Patentanspruch 14).
v) Dadurch dass
   Schnittstellen (62, 63; 61, 66) zur Sprachsyntheseeinheit (2) oder zur Spracherkennungseinheit (3) so ausgebildet sind, dass auf den verschiedenen Servern (10, 20, ..) verschiedene Sprachsyntheseeinheiten (2) oder verschiedene Spracherkennungseinheiten (3) auf den Servern (10, 20, ..) gegenseitig austauschbar sind;
   können verschiedene Produkte parallel eingesetzt werden, ohne dass eine Neuintegration erforderlich ist und durch den parallelen Einsatz verschiedener Produkte können spezifische Produkteigenschaften besonders genutzt oder vermieden werden (Patentanspruch 15).

Die Erfindung wird nachfolgend anhand der Zeichnung beispielsweise näher erläutert. Dabei zeigen:
- Figur 1: in Funktionseinheiten angegebene Struktur eines erfindungsgemässen Kommunikationssystems;
- Figur 2: Implementierung des erfindungsgemässen Verfahrens auf ein Rechnersystem.

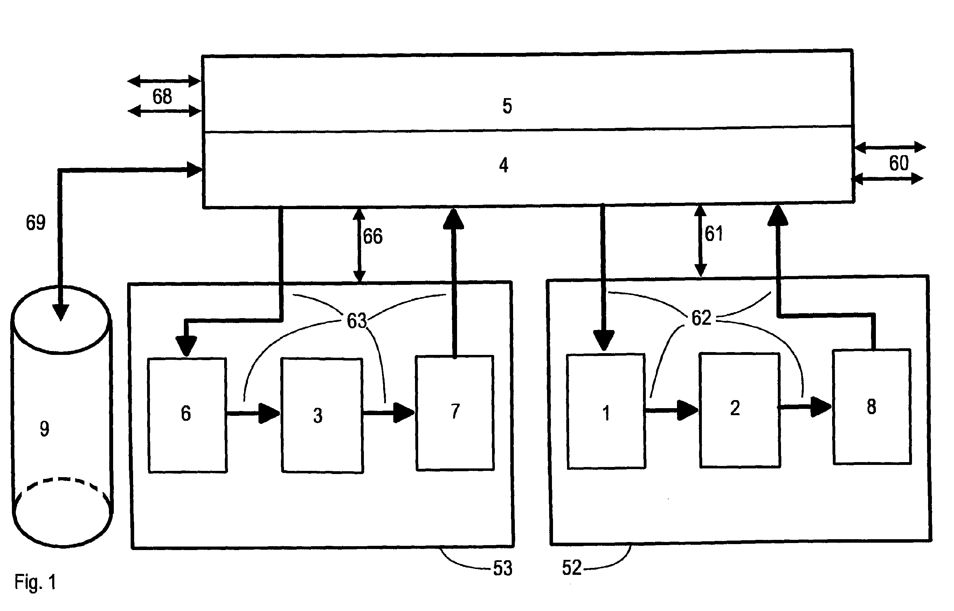

Figur 1 zeigt eine in Funktionseinheiten angegebene Struktur eines Ausführungsbeispiels eines erfindungsgemässen Kommunikationssystems. Die angegebenen Pfade sind nicht notwendigerweise als physische Anschlüsse oder Verbindungen anzusehen, sondern bevorzugt als logische oder funktionale Pfade. Das in Fig. 1 dargestellte Kommunikationssystem enthält erstens die Funktionseinheiten Dialogmaschine 5 und Vermittlungseinheit 4, die über externe Schnittstellen 60 an ein öffentliches oder privates Netzwerk angeschlossen ist. Diese Schnittstelle 60 kann verbindungslos mit einem Packetnetz, z.B. auf dem Protokoll TCP/IP basierend und/oder verbindungsorientiert mit einem TDM-Netz (Time Division Multiplex), z.B. über wenigstens einen ISDN-Primäranschluss S₂ ausgelegt sein. Zweitens enthält das Kommunikationssystem ein Spracheingabemodul 53 und ein Sprachausgabemodul 52. Dem Kommunikationssystem ist über eine weitere Schnittstelle 69 eine Datenbank 9 zugeordnet, in der eine Wissens- oder Informationsbasis enthalten ist, wie beispielsweise:
- Verzeichnis über Personen,
- Lösungsvorschläge zu über ein Produkt gestellten Fragen,
- Information über den Zustand der Elemente eines Energieverteilungsnetzes.

Die Dialogmaschine 5 ist über Schnittstellen 68 mit Terminals verbunden. Als Terminals sind vorzugsweise als Personalcomputer ausgebildete Arbeitsplatzsysteme vorgesehen, die neben Tastatur und Bildschirm auch Spracheingabe-/Sprachausgabemittel aufweisen wie z.B. eine Kopfsprechgarnitur. Physisch ist die Schnittstelle 68 bevorzugt als lokales Netzwerk LAN (LAN Local Area Network) ausgeführt. Der Vermittlungseinheit 4 kann ein Web-Server zugeordnet sein, der jene Inhalte und Steuerungsinformation enthält, die von der Dialogmaschine 5 in der Interaktion mit den Agenten oder mit über die Schnittstelle 60 kommunizierenden Anwender benötigt werden. Es ist auch möglich, dass die Anwenderterminals selbst an das LAN 68 angeschlossen sind. Ebenso ist es auch möglich, den Web-Server als Teil der Vermittlungseinheit 4 zu implementieren.

Das erfindungsgemässe Verfahren wird anhand von zwei Formaten von eingehenden Meldungen erläutert:
Format I:
   Eine als Anruf ausgebildete eingehende Meldung führt selbständig zu einer Generierung einer Antwortmeldung.
Format II:
   Eine als Text ausgebildete eingehende Meldung führt selbständig zu einer Generierung einer Antwortmeldung.

### Format I:

Voraussetzung: Alle Agenten sind beschäftigt oder eingehende Anrufe werden stets zur Dialogmaschine 5 geleitet.

### I. Verfahrensschritt A1:

Über die Schnittstelle 60 bei der Vermittlungseinheit 4 eingehende Anrufe werden von der Dialogmaschine 5 mit einem entsprechenden gesprochenen Hinweis entgegengenommen. Diese Hinweistexte sind dabei als direkt adressierbare Audio-Dateien vorzugsweise im Sprachausgabemodul 52 gespeichert. In einem von der Dialogmaschine 5 und/oder von der anrufenden Person gesteuerten oder zu steuernden Dialog wird der Anruf hinsichtlich Art, Ursprung und Ursprungsadresse analysiert und zusammen mit dem gesprochenen Anruftext in einem ersten Speicherbereich als typisierte Adresse TYPE_ADDR abgelegt. Somit wird für jeden Anruf eine solche Adresse TYPE_ADDR angelegt. Ein Beispiel einer Struktur einer typisierten Adresse TYPE_ADDR ist in der nachfolgenden Tabelle 1 angegeben:

**Tabelle 1**

| Struktur einer typisierten Adresse TYPE_ADDR | |
|---|---|
| Feld | Bedeutung |
| DATE_TIME_MSG | Datum/Uhrzeit des Eingangs |
| ADDR_SRC_TYPE | Typ der eingegangenen Meldung |
| ADDR_SRC | Ursprungsadresse |
| ADDR_SRC_CODING | Codierung |
| ADDR_SRC_PATH | Pfad der Herkunft |
| DATE_TIME_ANSWER | Gewünschtes Datum/Uhrzeit der Antwortmeldung |
| INPUT_ADDRESS | Empfängeradresse |
| | |
| ADDR_SRC_MSG_TYPE | Dateiformat der eingegangenen Meldung |
| PTR_ADDR_SRC_MSG_BODY | Zeiger auf die gespeicherte eingegangene Meldung |
| ANSWER_TYPE | Typ der generierten Antwortmeldung |
| : | |
| PTR_ANSWER_FILE | Zeiger auf die Antwortdatei |
| STATUS | Status der eingegangenen Meldung |
| : | |

Bezüglich Ursprungsadresse ADDR_SRC wird entweder die als Absender vermerkte E-Mail-Adresse, beispielsweise bei einer reinen IP-Sprachübertragung oder die Rufnummer gemäss dem ISDN-Leistungsmerkmal CLIP (Calling Line Identification Presentation) in der typisierten Adresse TYPE_ADDR gespeichert. Für den Ursprung ADDR_SRC_PATH wird der eingehende Pfad eingetragen, dies ist relevant für eine nachfolgende Signalverarbeitung in der akustischen Vorverarbeitungseinheit 6. Der eingegangene gesprochene Meldungstext, d.h. ein Anruf ist als Audiodatei vorzugsweise auf einem Massenspeicher abgespeichert, der im folgenden zweiter Speicherbereich genannt wird (nicht dargestellt in Fig. 1). Falls der Anruf mit der mündlichen Mitteilung einer Person als Datei eingegangen ist, kann die Datei im eingegangenen Format, z.B. .wav oder .mp3 direkt abgespeichert werden. Für die Verknüpfung typisierte Adresse TYPE_ADDR mit der Meldung ist vorzugsweise ein Zeiger vorgesehen. Die Verknüpfung kann zweiseitig vorgesehen sein, d.h. zusätzlich zur abgespeicherten Datei ist auch ein Zeiger zur typisierten Adresse TYPE_ADDR abgelegt.

### I. Verfahrensschritt B1:

Die weitere Verarbeitung des eingegangenen Anrufes erfolgt in einem Spracheingabemodul 53, das die bereits erwähnte akustische Vorverarbeitungseinheit 6, eine Spracherkennungseinheit 3 und einen Textausgabe-Dispatcher 7 enthält. Der Informations- bzw. Datenfluss ist im Spracheingabemodul 53 generell mit dem Bezugszeichen 63 bezeichnet, in der nachfolgenden Erläuterungen wird jeweils konkret auf die jeweilige Schnittstelle oder das jeweilige Format zwischen den einzelnen Einheiten hingewiesen. Zunächst wird der gespeicherte Anruf der akustischen Vorverarbeitungseinheit 6 zugeführt. Aufgrund der Angaben in den Feldern ADDR_SRC_CODING, ADDR_SRC_PATH und ADDR_SRC_MSG_TYPE kann in der akustischen Vorverarbeitungseinheit 6 z.B. eine Korrektur einer systematischen akustischen Abweichung von einem Normpegel oder eine Rauschunterdrückung vorgenommen werden; vorzugsweise wird in der akustischen Vorverarbeitungseinheit 6 auch eine Konversion in ein einheitliches Dateiformat vorgenommen. Der eingegangene Anruf wird nach dieser Vorverarbeitung der Spracherkennungseinheit 3 zugeführt und diese erzeugt eine Textdatei, die den Inhalt der gesprochenen Nachricht als Text enthält. Diese Textdatei wird anschliessend einem Textausgabe-Dispatcher 7 zugeführt, in dem eine semantische Analyse erfolgt. Ergibt diese semantische Analyse einen plausiblen Kontext zur vorgesehenen Abfrage in der Datenbank 9, wird gemäss einer festgelegten Syntax eine Abfragedatei QUERY_FILE erzeugt. Die Struktur einer solchen Abfragedatei QUERY_FILE ist beispielhaft in Tabelle 2 angegeben:

**Tabelle 2**

| QUERY_FILE | |
|---|---|
| Name | Bedeutung |
| QUERY | Kennzeichnung als Abfrage |
| SUBSCRIBER_ID= | Teilnehmernummer |
| NAME= | Name |
| LOCATION= | Ort |
| POSTAL_CODE= | Postleitzahl |
| : | |

Bei diesem Beispiel wird unterstellt, dass eine anrufende Person eine Auskunft über eine Telefonnummer eines Teilnehmers wünscht, der über seinen Namen und Wohnort identifiziert ist. Für die Abfrage können weitere in der Abfragedatei QUERY_STRUCTURE nicht dargestellte Felder vorgesehen sein. Mit einem über die Steuerungsschnittstelle 66 an die Vermittlungseinheit 4 zugeführten Kommando COMMAND wird die Abfragedatei QUERY_FILE an eine Datenbank 9 übermittelt. Die von der Datenbank 9 generierte Antwortmeldung, wird vorzugsweise als strukturierte Datei von Vermittlungseinheit 4 in einem zweiten Speicherbereich abgelegt und die entsprechende typisierte Adresse wird mit dieser Antwortdatei verknüpft, dazu ist ein Feld PTR_ANSWER_FILE in der typisierten Adresse vorgesehen. Zur vorgenannten semantischen Analyse kann ein in der typisierten Adresse enthaltenes Feld INPUT_ADDRESS herangezogen werden, aus diesem Feld ist der Regelfall ableitbar, welche Art von Antwortmeldungen die anrufende Person wünscht. Dies ist insbesondere dann wichtig, wenn mit dem erfindungsgemässen Kommunikationssystem völlig unterschiedliche Kategorien von eingehenden Meldungen und entsprechenden Antwortmeldungen generiert werden sollen, beispielsweise Adressauskünfte für ein breites Publikum und Netzzustandsauskünfte für einen eng begrenzten Kundenkreis eines Netzbetreibers.

### I. Verfahrensschritt C1:

Für den Fall, dass die Spracherkennungseinheit 3 den eingegangenen Anruf nicht in eine Textdatei umwandeln kann, wird über die Steuerungsschnittstelle 66 ein entsprechendes Kommando COMMAND an die Vermittlungseinheit 4 übermittelt, die den eingegangenen Anruf z.B. als E-Mail einem Agenten zusendet. Dieses E-Mail enthält einerseits die typisierte Adresse und andererseits den Anruf, z.B. als sogenanntes Attachment im Format .wav. Die Angabe der typisierten Adresse in dieser E-Mail kann gegenüber der abgespeicherten typisierten Adresse nur jene Felder enthalten, die für die Bearbeitung durch einen Agenten erforderlich sind, dabei wird der Inhalt für die Darstellung vorzugsweise in ein benutzerfreundliches Format konvertiert. Die Zustellung an einen Agenten braucht nicht personifiziert zu sein, sondern für alle Agenten kann ein einziges Eingangspostfach vorgesehen sein, das von ihnen sequentiell abzuarbeiten ist. Kann durch den Textausgabe-Dispatcher keine solche Abfragedatei erzeugt werden, wird über die Steuerungsschnittstelle 66 ein entsprechendes Kommando COMMAND an die Vermittlungseinheit 4 übermittelt und der eingehende Anruf wie vorhin bereits beschrieben mittels einem E-Mail an einen Agenten weitergeleitet. Die vorgenannte Zustellung wie auch die Weiterleitung von Anrufen erfolgen selbständig in der Dialogmaschine 5.

### I. Verfahrensschritt D1

Aufgrund einer Zustandsinformation STATUS und einer Angabe im Feld ANSWER_TYPE der typisierten Adresse, wird die im zweiten Speicherbereich in Textform abgelegte Antwortmeldung der im Sprachausgabemodul 52 enthaltenen Text-Vorverarbeitungseinheit 1 zugeführt. Der Informations- bzw. Datenfluss ist im Sprachausgabemodul 52 generell mit dem Bezugszeichen 62 bezeichnet, in der nachfolgenden Erläuterungen wird jeweils konkret auf die jeweilige Schnittstelle oder das jeweilige Format hingewiesen. Je nach Anwendung sind in der Text-Vorverarbeitungseinheit 1 mehrere, ggf. kumulative Schritte auf die in Textform vorhandene Antwortmeldung anzuwenden. Zunächst werden allfällige enthaltene Abkürzungen wie z.B. "str." in "Albisriederstr." für "strasse" oder NE in "Fleurier NE" für "Neuchâtel" als Text expandiert. In einem weiteren Schritt wird die Text-Vorverarbeitungseinheit 1 mit Hilfe eines phonetischen oder eines syntaktischen Lexikons die Textdatei an die Gewohnheiten der jeweiligen Diktion angepasst. Telefonnummern der Art "0714953286" sind nicht als Zahl, sondern als Zahlenfolge auszusprechen, demzufolge ist die vorgenannte Nummer in die Zahlenfolge "0 71 495 32 86" zu gliedern. Speziell in Ländern mit mehreren Amtssprachen können bestimmte Adressbestandteile in verschiedenen Sprachen abgelegt sein, z.B. "Dufourstrasse" oder "Mythenquai". Die korrekte schriftliche Angabe "Dufour" wird in eine phonetische Angabe "düfuhr" umgewandelt. Die vorgenannten Lexika können als eine weitere Datenbank dem Sprachausgabemodul 52 zugeordnet oder im Sprachausgabemodul 52 enthalten sein. Als weiterer Verfahrensschritt in der Text-Vorverarbeitungseinheit 1 ist die Konversion von Wörtern in sogenannte "Phoneme" oder Laute vorzunehmen, je nach verwendetem Produkt kann dieser Verfahrensschritt auch in der Sprachsyntheseeinheit 2 ablaufen. Die in eine phonetische Textdatei umgewandelte Antwortdatei wird der Sprachsyntheseeinheit 2 zugeführt, die eine die gesprochene Antwortmeldung enthaltende Sprachausgabedatei erzeugt. Diese Sprachausgabedatei ist vorzugsweise im Format .mp3 und wird dem Sprachausgabe-Dispatcher 8 zugeführt. Der Sprachausgabe-Dispatcher 8 ergänzt die vorstehend genannte Sprachausgabedatei mit sogenannten "Voice-Prompts", das sind gesprochene Textbausteine um gegenüber dem Anrufer die Auskunft in einer der guten Gepflogenheiten genügenden Form zu übermitteln. Beispiele solcher Textbausteine: "Die gewünschte Adresse lautet:" oder "Wir danken für Ihren Anruf". Ueber die Steuerungsschnittstelle 61 wird ein entsprechendes Kommando COMMAND an die Vermittlungseinheit 4 übermittelt, das die erfolgreiche Generierung einer Sprachausgabedatei meldet.

Diese Sprachausgabedatei wird vorzugsweise ebenfalls im zweiten Speicherbereich abgelegt. Dabei wird in der typisierten Adresse ein Zeiger auf die Sprachausgabedatei gesetzt und der Status nachgeführt, z.B. READY_FOR_DISPATCHING. Abhängig von den Angaben in der typisierten Adresse wird die Antwortdatei als E-Mail an die Ursprungsadresse zurückgesandt oder nach einem erfolgten Verbindungsaufbau (CONNECT) zur Ursprungsadresse abgespielt.

Durch die Angaben in der typisierten Adresse, insbesondere durch jene im Feld Status, ist es auch möglich, einen eingehenden Anruf in Echtzeit mit den vorstehend erläuterten Verfahrensschritten zu beantworten. Dabei erfolgt unmittelbar vor dem Verfahrensschritt B1 gemäss dem zu führenden Dialog eine Iteration von Verfahrensschritten zur Spracherkennung und zur Sprachsynthese. Diese Iteration wird solange durchgeführt, bis durch die Spracherkennungseinheit 3 und durch den Textausgabe-Dispatcher die eine Anfrage gebildet werden kann.

### Format II:

Voraussetzung: Eine als Text ausgebildete eingegangene Meldung.

Eine in Textform eingegangene Meldung hat vorzugsweise ein vereinbartes Format, dass entweder von einer Anwendung bei der anfragenden Person so erzeugt wird oder von der anfragenden Person direkt so erstellt wird. Dabei wird zweckmässigerweise ein Format vereinbart, das eine Struktur gemäss der Darstellung in Tabelle 2 aufweist. Dabei können zusätzliche Felder vorgesehen sein, in denen beispielsweise der gewünschte Antworttyp oder der gewünschte Antwortzeitpunkt angegeben werden können. Die Angabe des Antwortzeitpunktes ist vorteilhaft für die Generierung eines Zusatzdienstes, in dem z.B. ein mobiler Teilnehmer während seiner Reisezeit bestimmte Informationen erhalten kann, die abhängig vom Anfragezeitpunkt in der Datenbank sind, z.B. Zustandsdaten eines Netzes. Nachfolgend wird eine unter "Format I" kumulativ vorgesehene Ausführungsform der vorliegenden Erfindung beschrieben.

### II. Verfahrensschritt A1

Der Verfahrensschritt A1 unterscheidet sich nicht von jenem, bei dem ein Anruf als eingehende Meldung behandelt wird. Zur Ergänzung zu dem unter I. erläuterten Verfahrensschritt A1 können in einer bevorzugten Ausführungsform die Angaben in typisierte Adresse zur Steuerung des gesamten Verfahrensablaufes benutzt werden. Mit den Feldern ADDR_SRC_TYPE, ADDR_SRC, DATE_TIME_ANSWER, ANSWER_TYPE und der Fortschreibung des Bearbeitungszustandes einer eingehenden Meldung im Feld STATUS über die Steuerungsschnittstellen 61 und 66 kann eine solche Meldung direkt einer Einheit in den beiden Modulen 53 und 52 bzw. der Datenbank 9 zugewiesen werden. Alternativ ist es auch möglich ohne den angegebenen Informationsfluss zu tangieren, aufgrund der Angaben in den Feldern in der typisierten Adresse Dateien von den einzelnen Einheiten transparent, d.h. ohne Ausführung eines Verarbeitungsschrittes weiter zu leiten.

### II. Verfahrensschritt B11

Wie vorstehend erläutert, wird die eingehende Meldung dem Textausgabe-Dispatcher 7 zugeführt, in dem die unter B1 beschriebene Erzeugung einer Abfragedatei QUERY_FILE vorgenommen wird. Dabei kann die genannte semantische Analyse auch entfallen, da in einer eingegangenen Meldung in Textform insbesondere keine Füllwörter zu erwarten sind. Trotzdem ist der Fall einzubeziehen, wo der Textausgabe-Dispatcher 7 keine Abfrage-Datei erzeugen kann. Tritt dieser Fall ein, wird über die Steuerungsschnittstelle 66 ein entsprechendes Kommando COMMAND an die Vermittlungseinheit 4 übermittelt, und die betreffende Meldung entweder versehen mit einem erläuterten Text an die Ursprungsadresse zurückgesandt oder in Form eines E-Mails einem Agenten zugewiesen. Für den Regelfall, wo eine Abfragedatei QUERY_FILE erfolgreich erzeugt werden kann, erfolgt die weitere Verarbeitung gemäss den vorstehend beschriebenen Verfahrensschritten C1 und D1.

Die vorstehend erläuterten Verfahrensschritte im Spracheingabemodul 53 und im Sprachausgabemodul 52 sind frei entsprechend der jeweiligen Anwendung und des jeweiligen Ursprungs der Meldungen voneinander unabhängig und somit frei kombinierbar. Insbesondere ist auch die weitere Verarbeitung der von der Sprachsyntheseeinheit generierten Antwortmeldung unabhängig von z.B. der akustischen Vorverarbeitung.

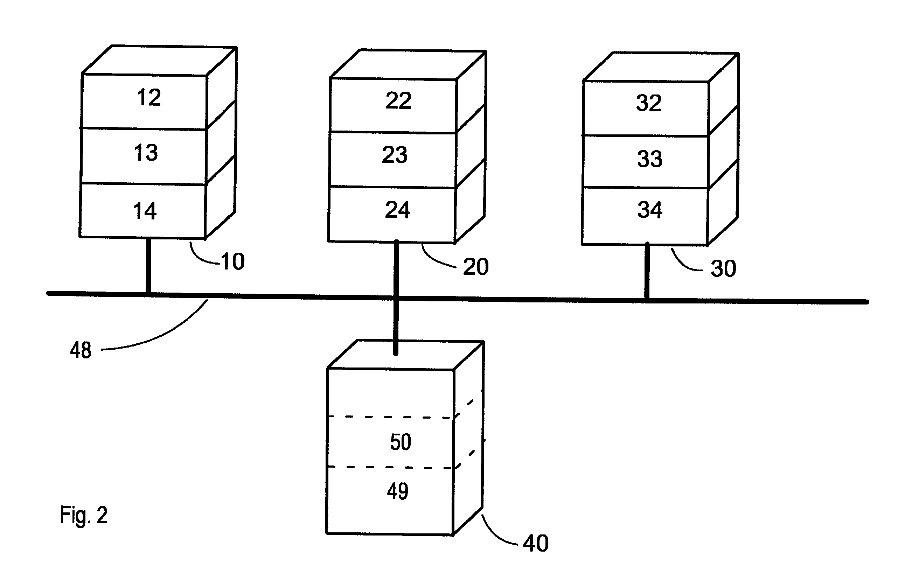

In der Fig. 2 ist eine bevorzugte Implementierung des erfindungsgemässen Verfahrens auf ein Rechnersystem dargestellt. Mit den Bezugszeichen 10, 20, 30 und 40 sind vier Server dargestellt, die je ein Prozessorsystem und einen Massenspeicher aufweisen. Diese Server sind über ein lokales Netzwerk 48 miteinander verbunden. An diesem Netzwerk 48 sind die für die Agenten vorgesehenen Terminals direkt oder über z.B. Router angeschlossen. Für die Verbindung nach aussen können Gateways oder eine Nebenstelle vorgesehen sein, wobei die einen eingehenden Anruf aus dem öffentlichen leitungsvermittelten Netz in ein packetorientiertes Format, beispielsweise auf dem Internet-Protokoll basierend, konvertieren. Über weitere Router und ggf. eine Firewall kann dieses lokale Netzwerk direkt zu einem Internet-Service-Provider geschaltet werden. Die gemäss den Verfahrensschritten B1 und D1 vorzunehmenden Konversionen in der Sprachsynthese-Einheit 2 und der Spracherkennungseinheit 3 erfordern eine hohe Rechenleistung. In einer Implementation gemäss der Fig. 2 sind die vorgenannten Einheiten 2 und 3 auf die Server 10, 20 und 30 verteilt, d.h. je einmal vollständig implementiert, dies ist mit den Bezugszeichen 12, 13; 22, 23 und 32, 33 dargestellt. Dadurch ist eine parallele Arbeitsweise möglich, die die Verarbeitungskapazität wie auch die Redundanz des erfindungsgemässen Verfahrens wesentlich erhöht. Ebenso ist die Vermittlungseinheit 4 dreifach implementiert. In dieser Ausführungsform ist die Dialogmaschine 5 dem vierten Server 40 zugeordnet. Auf dem Server 5 wird auch auf die Lastverteilung für die vorgenannten drei Server vorgenommen. In dieser Implementation ist die Datenbank 9 auf dem vierten Server 40 enthalten. Je nach Anwendung kann die Datenbank auch abgesetzt sein oder von einem externen Provider betrieben werden. Die in wenigstens einer weiteren Datenbank enthaltenen Sonderlexika, die vom Textausgabe-Dispatcher 7 benötigt werden, ist vorzugsweise einmal auf einem Server implementiert. Die Zuordnung zu den einzelnen Servern der weiteren Einheiten wie z.B. die akustische Vorverarbeitungseinheit 6 oder die Text-Vorverarbeitungseinheit 1 ist in Fig. 2 nicht dargestellt. Möglich ist ebenfalls eine "verteilte" Zuordnung oder eine Zuordnung an einen einzigen Server.

Für die Implementierung der einzelnen Einheiten wird vorzugsweise eine Architektur gemäss CORBA verwendet. Das Akronym CORBA steht für Common Object Request Broker Architecture. Die technische Implementation dieser Architektur basiert auf sogenannten ORB's (ORB: Object Request Broker). Ein ORB ermöglicht es einem Client - das ist hier z.B. eine eingegangene Meldung - ein Kommando COMMAND (vgl. z.B bei den Verfahrensschritten B1, D1) an ein Serverobjekt zu senden, das auf demselben oder einem anderen Server ablaufen kann. Der ORB ist die Instanz, die das Serverobjekt findet, die Parameter übergibt, dort die Funktion aufruft und nach erfolgter Abarbeitung das Resultat an den Client zurückgibt. Die Architektur CORBA enthält eine implementationsunabhängige Schnittstellenbeschreibungssprache IDL (Interface Description Language). Nach erfolgter Schnittstellendefinition können anschliessend in der Codierung von Client und Serverobjekt verschiedene Sprachen verwendet werden, z.B. Java für den Client, C++ für das Serverobjekt sowie eine Datenbankabfragesprache für den Zugriff auf die Datenbank 9 oder die die Sonderlexika enthaltende Datenbank. Durch die Verwendung der Architektur CORBA und durch die Gliederung in Funktionseinheiten ist es möglich, insbesondere für die Spracherkennungseinheit 3 und die Sprachsyntheseeinheit 2 Produkte anderer Hersteller einzusetzen, ohne das eine Neuintegration des gesamten Kommunikationssystems erforderlich ist. Alternativ zur Architektur CORBA kann auch die objektorientierte Programmiersprache Java zur Implementierung auf die verschiedenen Server verwendet werden. Die Schnittstellen 62 zur Sprachsyntheseeinheit 2 können im Fall von CORBA mittels SAPI (Speech Application Programming Interface) realisiert oder bei Wahl der vorgenannten Programmiersprache Java mittels JSAPI (Java Speech Application Programming Interface) werden. Java wie auch JSAPI zeichnet sich dadurch aus, dass der nach einer Compilation in sogenannten "Bytecode" übersetzte Quellprogrammcode - einschliesslich der Interface-Definitionen - auf irgendeinem Server des Rechnersystems ablaufen kann; Voraussetzung ist lediglich, dass ein entsprechendes Laufzeitsystem, das ist in diesem Fall eine sogenannte "Java virtual machine" installiert ist, dass den "ByteCode" in auf dem betreffenden Server ablauffähige Maschineninstruktionen übersetzt. Für die vorstehend bei der Beschreibung für das Format I erläuterten Verfahrensschritte D1 wird vorzugsweise zur Sprache JSAPI die Sprache JSML (Java Speech Markup Language) verwendet. Dazu wird ein Element "SAYAS" verwendet, mit dem eine Prosodie-Analysis und eine prosodische Markierung der in Textform vorliegenden Phrasen und Phrasenteile vorgenommen werden kann. Damit ist es auch möglich, in den zu synthetisierenden Phrasen Anfang und Ende eines Satzes oder Abschnittes zu markieren, um dadurch für den Hörer durch den Tonfall der synthetischen Stimme die Verständlichkeit zu erhöhen. Die erwähnte Expansion von Abkürzungen kann ebenfalls mit dem SAYAS-Element von JSML vorgenommen werden, wobei vorzugsweise anwendungsspezifische Abkürzung vorgängig durch gewöhnliche Textsubstitution expandiert werden.

Die konkrete Implementation stützt sich beispielsweise auf ein Lieferpacket, das in einer Klasse "javax.speech" eine Methode "createSynthesizer" zur Verfügung stellt. Mit der Methode "Allocate" werden die benötigten Resourcen, wie z.B.

Priorität und Speicherplatz bereitgestellt und mit der Methode "Resume" in eine aktiven Zustand überführt. Die Methode "Generate" synthetisiert aus einem wie vorstehend erwähnt prosodisch ergänzten Zeichenstring eine Sprachmeldung, z.B. im Dateiformat .mp3 oder .wav. Mit der Methode "Deallocate" werden die bereitgestellten Resourcen wieder freigegeben. Dieser sequentiell dargestellte Ablauf ist dabei zeitlich mehrfach parallel, um verschiedene Anrufer gleichzeitig bedienen können. Eine geforderte hohe Parallelität wird vorzugsweise mit einer Implementation erreicht, die der in Fig. 2 angegebenen Struktur eines Rechnersystems entspricht.

Eine Verwendung von Java hat den Vorteil, das sowohl für die Dialogmaschine 5 wie auch für das Interfacing zur Sprachsyntheseeinheit 2 die Programmiersprachen insoweit homogen ist, als dies die Entwicklung vereinfacht.

Durch die Aufteilung der Funktionseinheiten auf die verschiedenen Server 10, 20, 30 und 40 ist es auch möglich gleichzeitig verschiedene Produkte einzusetzen, z.B. verschiedene Sprachsynthese-Produkte für die Sprachsyntheseeinheit 2 bzw 12, 22, .. oder verschiedene Spracherkennungs-Produkte für die Spracherkennungseinheit 3 bzw. 13, 23, .. gemäss der Darstellung in Fig. 2. Dadurch werden diese Einheiten 12, 22, .. bzw. 13, 23, .. untereinander austauschbar, so dass ein Produkte-Wechsel bei Einhaltung der Schnittstellen in den verschieden Sichten 61, 62 bzw. 63, 66 des erfindungsgemässen Kommunikationssystem ohne eine Neu-Integration erfolgen kann.

In einer weiteren Ausführungsform der vorliegenden Erfindung kann vorgesehen sein, dass ein Anrufer mit einer eingehenden Meldung ein sogenanntes Alarmfenster definieren kann. Beispielsweise kann für den Zustand eines Netzwerkelementes eine Schwelle definiert werden. Bei Ueberschreiten einer vom Anrufer festgelegten Schwelle, z.B. eine bestimmte Anzahl von Alarmen oder Alarme ab einer bestimmten Priorität erfolgt vom erfindungsgemässen Kommunikationssystem eine Übermittlung einer Antwortmeldung an den vorerwähnten Anrufer; z.B. "Das Netzelement Wülflingen 3 weist 4 Alarme der Stufe 2 und höher auf". Das Medium dieser Antwortmeldung kann als eine Textmeldung mit dem Dienst SMS (Short Message Service) auf ein GSM-Terminal ausgebildet sein oder als Anruf, dessen synthetische Stimme in der Sprachsyntheseeinheit 2 erzeugt wurde. Der vorstehend erwähnte Schwellwert ist auch auf nicht technische Anwendungen anwendbar, z.B. ein bestimmter Kurswert einer Aktie.

### Liste der verwendeten Bezugszeichen

- 1: Text-Vorverarbeitungseinheit
- 2: Sprachsyntheseeinheit
- 3: Spracherkennungseinheit
- 4: Vermittlungseinheit
- 5: Dialogmaschine
- 6: Akustische Vorverarbeitungseinheit
- 7: Textausgabe-Dispatcher
- 8: Sprachausgabe-Dispatcher
- 9: Datenbank
- 10: Erster Server
- 12: Sprachsyntheseeinheit auf erstem Server
- 13: Spracherkennungseinheit auf erstem Server
- 14: Vermittlung/Dialogmaschine auf erstem Server
- 20: Zweiter Server
- 22: Sprachsyntheseeinheit auf zweitem Server
- 23: Spracherkennungseinheit auf zweitem Server
- 24: Vermittlung/Dialogmaschine auf zweitem Server
- 30: Dritter Server
- 32: Sprachsyntheseeinheit auf drittem Server
- 33: Spracherkennungseinheit auf drittem Server
- 34: Vermittlung/Dialogmaschine auf drittem Server
- 40: Vierter Server
- 48: Lokales Netzwerk
- 49: Datenbank auf viertem Server
- 50: Lastverteilung
- 52: Sprachausgabemodul
- 53: Spracheingabemodul
- 60: Externe Schnittstelle
- 61: Steuerungsschnittstelle zum Sprachausgabemodul 52
- 62: Informationsfluss im Sprachausgabemodul 52
- 63: Informationsfluss im Spracheingabemodul 53
- 66: Steuerungsschnittstelle zum Spracheingabemodul 53
- 68: Schnittstelle zu den Terminals
- 69: Schnittstelle zur Datenbank

## Patentansprüche

1. Verfahren zur Generierung von Antwortmeldung auf eingehende Meldungen mittels eines mit wenigstens einer Datenbank (9) koppelbaren Kommunikationssystems, das enthält:
- eine Vermittlungseinheit (4)
- wenigstens ein Spracheingabemodul (53, 3),
- wenigstens ein Sprachausgabemodul (52, 2) und
wobei die Meldungen als
- Anrufe in Echtzeit oder als
- gespeicherte Anrufe ausgebildet sind
und wobei Terminals für Agenten dem Kommunikationssystem zugeordnet sind,
**gekennzeichnet durch** folgende Verfahrensschritte:
A1 von den bei der Vermittlungseinheit (4) eingehenden Meldungen werden Art und Ursprung analysiert, mit der jeweiligen Meldung verknüpft und in einem ersten Speicherbereich als typisierte Adresse (TYPE_ADDR) abgelegt,
B1 dem Spracheingabemodul (53, 3) zugeführte und vom Spracheingabemodul (53, 3) verarbeitete Anrufe werden in Anfragen (QUERYFILE) konvertiert, die zur wenigstens einen Datenbank (9) übermittelt werden und von der Datenbank (9) generierte Antwortmeldungen werden in einem zweiten Speicherbereich abgelegt;
C1 vom Spracheingabemodul (53, 3) nicht verarbeitete oder nicht verarbeitbare Anrufe werden einem Agenten zugewiesen;
D1 die im zweiten Speicherbereich abgelegten Antwortmeldungen werden abhängig von Angaben der im ersten Speicherbereich abgelegten typisierten Adresse (TYPE_ADDR) direkt oder als eine im Sprachausgabemodul (52, 2) konvertierte Antwortmeldung an den Ursprung der eingegangenen Meldung übermittelt.

2. Verfahren nach Anspruch 1,
**dadurch gekennzeichnet, dass**
die im Verfahrensschritt D1 vom Sprachausgabemodul (52, 2) konvertierten Antwortmeldungen mit festen Sprachtexten ergänzt werden.

3. Verfahren nach Anspruch 1 oder 2,
**dadurch gekennzeichnet, dass**
im Verfahrensschritt C1 jene Antwortmeldungen, die aufgrund von Agenten erzeugten Anfragen zur wenigstens einen Datenbank (9) generiert werden, ebenfalls im zweiten Speicherbereich des Rechnersystems (10, 20, ..) abgelegt werden.

4. Verfahren nach einem der Ansprüche 1 bis 3,
**dadurch gekennzeichnet, dass**
in einem zusätzlichen Verfahrensschritt B11 in Textform eingehende Meldungen nach Feststellung einer korrekten Syntax zu Anfragen zur wenigstens einen Datenbank (9) konvertiert werden.

5. Verfahren nach Anspruch 4,
**dadurch gekennzeichnet, dass**
die im zusätzlichen Verfahrensschritt B11 nicht konvertierbaren in Textform eingegangenen Meldungen entweder im Verfahrensschritt C1 einem Agenten zugewiesen oder mit der im Verfahrensschritt A1 abgelegten typisierte Adresse (ADDR) gespeichert werden.

6. Verfahren nach Anspruch 5,
**dadurch gekennzeichnet, dass**
die zusammen mit der typisierten Adresse (ADDR_TYPE) gespeicherte Textmeldung vor Ausführung des Verfahrensschrittes D1 mit einem Hinweistext ergänzt wird, der vom Ergebnis der im Verfahrensschritt B11 vorgenommenen Konversion abhängig ist.

7. Verfahren nach einem der Ansprüche 1 bis 6,
**dadurch gekennzeichnet, dass**
im Verfahrensschritt D1 vorgängig der Konversion im Sprachausgabemodul (52, 2) die Antwortmeldung in einer im Sprachausgabemodul (52, 2) enthaltenen Text-Vorverarbeitungseinheit (1) bezüglich der in der Antwortmeldung enthaltenen Ziffern gruppiert wird oder bezüglich in der Antwortmeldung enthaltenen fremdsprachigen Wörtern phonetisch oder prosodisch ergänzt wird.

8. Verfahren nach einem der Ansprüche 1 bis 7,
**dadurch gekennzeichnet, dass**
im Verfahrensschritt B1 die vom Spracheingabemodul (53, 3) verarbeiteten vorgängig der Übermittlung an die Datenbank in einem im Spracheingabemodul (53, 3) enthaltenen Textausgabe-Dispatcher semantisch und/oder syntaktisch überprüft wird.

9. Verfahren nach einem der Ansprüche 1 bis 8,
**dadurch gekennzeichnet, dass**
im Verfahrensschritt B1 die eingehenden Meldungen in einem im Spracheingabemodul (53, 3) enthaltenen akustischen Vorverarbeitungseinheit (6) einer Rauschunterdrückung unterzogen oder bezüglich einer Pegelabweichung korrigiert werden.

10. Kommunikationssystems zur Generierung von Antwortmeldungen auf eingehende Meldungen das enthält:
- wenigstens ein Spracheingabemodul (63, 3),
- wenigstens ein Sprachausgabemodul (52, 2),
- eine Vermittlungseinheit (4) und
wobei die Meldungen als
- Anrufe in Echtzeit oder als
- gespeicherte Anrufe ausgebildet sind,
und dem Kommunikationssystem wenigstens eine Datenbank (9) und Terminals für Agenten zugeordnet sind,
**dadurch gekennzeichnet, dass**
- über die Vermittlungseinheit (4) eingehende Meldungen in einem ersten Speicherbereich speicherbar sind und zum Spracheingabemodul (63, 3) schaltbar sind,
- vom Spracheingabemodul (53, 3) generierte Anfragen zur zugeordneten Datenbank übermittelbar sind und von der Datenbank (9) generierte Antwortmeldungen in Textform in einem zweiten Speicherbereich speicherbar sind,
- vom Spracheingabemodul (53, 3) nicht verarbeitete oder nicht verarbeitbare Meldung einem Agenten zuweisbar sind;
- im zweiten Speicherbereich gespeicherte Antwortmeldung direkt oder über eine im Sprachausgabemodul (52, 2) konvertierte Antwortmeldung dem Ursprung der eingehenden Meldung übermittelbar ist.

11. Kommunikationssystem nach Anspruch 10,
**dadurch gekennzeichnet, dass**
das Sprachausgabemodul (52, 2) eine Textvorverarbeitungseinheit (1), eine Sprachsyntheseeinheit (2) und einen Sprachausgabe-Dispatcher (8) enthält.

12. Kommunikationssystem nach Anspruch 10 oder 11,
**dadurch gekennzeichnet, dass**
das Spracheingabemodul (53, 3) eine akustische Vorverarbeitungseinheit (6), eine Spracherkennungseinheit (3) und einen Textausgabe-Dispatcher (7) enthält.

13. Kommunikationssystem nach einem der Ansprüche 10 bis 12,
**dadurch gekennzeichnet, dass**
an die Vermittlungseinheit (4) eine Dialogmaschine (5) angeschlossen ist, die die Dialoge selbständig steuert.

14. Kommunikationssystem nach Anspruch 11 oder 12,
**dadurch gekennzeichnet, dass**
die Vermittlungseinheit (4) und/oder das Spracheingabemodul (53, 3) und/oder das Sprachausgabemodul (52, 2) auf mehrere über ein Netzwerk verbundene Server (10, 20, ..) verteilt implementiert ist.

15. Kommunikationssystem nach Anspruch 14,
**dadurch gekennzeichnet, dass**
Schnittstellen (62, 63; 61, 66) zur Sprachsyntheseeinheit (2) oder zur Spracherkennungseinheit (3) so ausgebildet sind, dass auf den verschiedenen Servern (10, 20, ..) verschiedene Sprachsyntheseeinheiten (2) oder verschiedene Spracherkennungseinheiten (3) auf den Servern (10, 20, ..) gegenseitig austauschbar sind.

16. Kommunikationssystem nach Anspruch 15 oder 14,
**dadurch gekennzeichnet, dass**
ein Server (40) vorgesehen ist, auf dem eine Lastverteilung (50) implementiert ist, die die eingehenden Anrufe und/oder die generierten Anfragen und/oder Antwortmeldungen zur Verarbeitung auf verschiedene Server (10, 20, ..) zuweist.

17. Kommunikationssystem nach Anspruch 11 oder 12,
**dadurch gekennzeichnet, dass**
die Vermittlungseinheit (4), das Spracheingabemodul (53, 3) und das Sprachausgabemodul (52, 2) auf je einem über ein Netzwerk verbundenem Server (10, 20, ..) implementiert ist.
